(19) Europäisches Patentamt
European Patent Office
Office européen des brevets

(11) **EP 2 961 083 B1**

(12) **EUROPEAN PATENT SPECIFICATION**

(45) Date of publication and mention
of the grant of the patent:
**31.05.2017 Bulletin 2017/22**

(51) Int Cl.:
***H04B 7/26*** (2006.01)

(21) Application number: **14306033.3**

(22) Date of filing: **27.06.2014**

(54) **Multiple access scheme**

Mehrfachzugangsschema

Schéma à accès multiples

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.12.2015 Bulletin 2015/53**

(73) Proprietor: **ALCATEL LUCENT
92100 Boulogne-Billancourt (FR)**

(72) Inventors:
• **Chen, Yejian
70435 Stuttgart (DE)**
• **Wild, Thorsten
70435 Stuttgart (DE)**
• **Schaich, Frank
70435 Stuttgart (DE)**

(74) Representative: **Menzietti, Domenico et al
Alcatel Lucent
Intellectual Property & Standards
70430 Stuttgart (DE)**

(56) References cited:
**US-A1- 2006 039 271**

• **RITT: "Uplink Multiple Access Aspect of FDD
LTE", 3GPP DRAFT; R1-050402, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, vol. RAN WG1, no. Athens,
Greece; 20050503, 3 May 2005 (2005-05-03),
XP050100098, [retrieved on 2005-05-03]**
• **PENG WANG ET AL: "Power Allocation for
Practically Coded IDMA Systems over Broadcast
Channels", INFORMATION THEORY
WORKSHOP, IEEE, IEEE, PISCATAWAY, NJ, US,
1 October 2006 (2006-10-01), pages 673-677,
XP031055622, ISBN: 978-1-4244-0067-6**

## Description

Embodiments of the present disclosure generally relate to wireless communication systems and, more particularly, to multiple access schemes for wireless or mobile communications.

Background

This section introduces aspects that may be helpful in facilitating a better understanding of the inventions. Accordingly, the statements of this section are to be read in this light and are not to be understood as admissions about what is in the prior art or what is not in the prior art.

Frequency Division Multiple Access (FDMA) is one of today's multiple access techniques, which is adopted by current standards of wireless communications. FDMA provides users an individual allocation of one or several frequency bands, also referred to as channels or carriers. While FDMA works well for certain wireless radio link conditions, it can be less advantageous in other scenarios, for example due to the following reasons:

- Users may suffer from relatively high Inter-Carrier Interference (ICI) or crosstalk.
- A frequency selective channel can damage completes frames of a user, if deep fading appears.
- For users with high mobility, a regular scheduling approach above may not deliver robust performance.
- Complex scheduling procedures and channel feedback mechanisms required

Hence, there is a desire for more flexible multiple access schemes, in particular for future generations of wireless or mobile communication systems. Hybrid multiple access techniques combining orthogonal multiplexing (e.g. FDMA, TDMA) with non-orthogonal multiplexing (CDMA, IDMA and SSDMA) may be approaches to meet the desire. Document WO2010/018927 discloses a method for switching between multiple access schemes based on the observed radio link characteristic. The 3rd Generation Partnership Project (3GPP) contribution Ritt: "Uplink Multiple Access Aspect of FDD LTE", 3GPP Draft; R1-050402, 3rd Generation Partnership Project (3GPP), Mobile Competence Centre; 650, Route Des Lucioles; F-06921 SophiaAntipolis Cedex; France, vol. RAN WG1, no. Athens, Greece; 20050503, 3 May 2005, describes a Generalized Multi-Carrier (GMC) transmission scheme and develops and evaluates relative key techniques. The discussed flexible multicarrier transmission is an attractive hybrid multiple access scheme, especially for uplink.

Summary

Some simplifications may be made in the following summary, which is intended to high-light and introduce some aspects of the various exemplary embodiments, but such simplifications are not intended to limit the scope of embodiments. Detailed descriptions of a preferred exemplary embodiment adequate to allow those of ordinary skill in the art to make and use the inventive concepts will follow in later sections.

According to one aspect of the present disclosure, it is provided a method for a wireless communication system. The wireless communication uses at least one multiple access scheme for a plurality of wireless users. The method includes an act of observing at least one radio link characteristic for at least one of the plurality of wireless users. Based on the at least one observed radio link characteristic, the multiple access scheme for the at least one wireless user is switched or altered between Frequency Division Multiple Access (FDMA) and Interleave Division Multiple Access (IDMA).

Hence, one idea of the present disclosure is to split radio resources for the plurality of wireless users (or a part thereof) between IDMA and FDMA. While one part of the plurality of wireless users may use FDMA, another part may use IDMA to access available physical radio resources.

In some embodiments, the alternative multiple access schemes, IDMA and FDMA, may be used on top of a multi-carrier modulation technique, such as Orthogonal Frequency-Division Multiplexing (OFDM), Filter-Bank-based Multi-Carrier (FBMC), or so-called Universal Filtered Multi-Carrier (UFMC), for example. UFMC can be considered as a generalization of filtered OFDM and FBMC. While filtered OFDM uses filtering for an entire frequency band and FBMC uses a filtering per subcarrier, UFMC relies on filtering on a per sub-band basis, for a group of subcarriers, e.g. a Physical Resource Block (PRB) in the Long-Term Evolution (LTE) terminology.

While in FDMA user-specific frequency bands are used to separate different users, ID-MA employs user-specific interleavers as the means for user separation. That is to say, for IDMA different users get assigned different interleavers. A user may also have assigned more than one so-called IDMA layer, meaning that the user's data may be encoded by more than one FEC encoder and/or interleaved by more than one interleaver. The interleavers of different layers are different. That is to say, in IDMA a number of layers will be equal to or larger than the number of users. Under some wireless radio link conditions IDMA may provide for diversity against fading and for mitigation of interference problems. Under other wireless radio link conditions FDMA may be the better choice for multiple access of the available physical radio resources.

In some embodiments, using IDMA as the multiple access scheme for the at least one wireless user may comprise using a lower Forward Error Correction (FEC) code rate and/or a lower-order modulation scheme than used in the case of FDMA as the multiple access scheme for the at least one wireless user.

In some embodiments, observing the at least one radio link characteristic may comprise verifying whether the at least one wireless user experiences user mobility above a predefined mobility threshold. If the mobility threshold is exceeded, IDMA may be used for the at least one wireless user. If the user's experienced mobility falls below the mobility threshold, FDMA may be used as multiple access scheme for the at least one wireless user.

Additionally or alternatively, observing the at least one radio link characteristic may comprise verifying whether a receive power capability and/or transmit power capability of the at least one wireless user falls below a predefined power threshold. If the receive power capability and/or transmit power capability exceeds the power threshold, FDMA may be used for the at least one wireless user. If the user's receive power capability and/or transmit power capability falls below the power threshold, IDMA may be used as multiple access scheme for the at least one wireless user.

Additionally or alternatively, verifying the at least one radio link characteristic may comprise verifying whether the at least one wireless user experiences Inter-Carrier Interference (ICI) above a predefined ICI threshold from at least one other wireless user. If the experienced ICI exceeds the ICI threshold, IDMA may be used for the at least one wireless user and the at least one other wireless user. If the user's experienced ICI falls below the ICI threshold, FDMA may be used as multiple access scheme for the at least one wireless user and the at least one other (interfering) wireless user.

Additionally or alternatively, verifying the at least one radio link characteristic may comprise verifying whether the at least one wireless user experiences or causes temporal asynchronous status or asynchronicity to other users above a predefined asynchronicity threshold. If the temporal asynchronous status exceeds the asynchronicity threshold, ID-MA may be used for the at least one wireless user. If the user's asynchronous status falls below the asynchronicity threshold, FDMA may be used for the at least one wireless user.

Additionally or alternatively, using IDMA as the multiple access scheme for the at least one wireless user may comprise adjusting a number of IDMA layers or users multiplexed on the same time-frequency radio resources based on observing a current error rate. In one embodiment, the error rate may be a Block Error Rate (BLER). For example, the number of layers/users may be reduced, if the observed current error rate exceeds a target error rate. On the other hand, the number of layers/users may be increased, if the observed current error rate falls below the target error rate.

Additionally or alternatively, using IDMA as the multiple access scheme for the at least one wireless user may comprise adjusting an Automatic Repeat Request (ARQ) retransmission probability, e.g. a Hybrid Automatic Repeat Request (HARQ) retransmission probability, for the at least one wireless user based on observing a current retransmission error rate. In one embodiment, the ARQ-retransmission probability may be decreased, if the observed retransmission error rate exceeds a retransmission error rate threshold. On the other hand, the ARQ-retransmission probability may be increased, if the observed retransmission error rate falls below the retransmission error rate threshold.

According to a further aspect of the present disclosure, it is provided an apparatus for a wireless communication system. The wireless communication uses a multiple access scheme for a plurality of wireless users. The apparatus includes circuitry configured to observe at least one radio link characteristic for at least one of the plurality of wireless users. Further, the apparatus includes switching circuitry configured to switch, based on the at least one observed radio link characteristic, between Frequency Division Multiple Access (FDMA) and Interleave Division Multiple Access (IDMA) as the multiple access scheme for the at least one wireless user.

In some embodiments, the apparatus may be a network entity of the wireless communication system, such as a base station, for example. The apparatus is configured to perform the acts of the described method. Some embodiments comprise digital circuitry installed within the devices or apparatuses for performing the respective acts. Such a digital control circuitry, e.g., a Digital Signal Processor (DSP), a Field-Programmable Gate Array (FPGA), an Application-Specific Integrated Circuit (ASIC), or a general purpose processor may be coupled to memory circuitry and needs to be configured accordingly by hardware and/or software. Hence, yet further embodiments also provide a computer program having a program code for performing embodiments of the method(s), when the computer program is executed on a computer or a programmable hardware device.

Embodiments provide mechanisms related to link adaptation enabling a system to combine and configure IDMA and FDMA in an efficient manner. Some embodiments provide additional mechanisms for adding/removing IDMA layers in scheduled access. The retransmission probability may be controlled in contention-based access. Embodiments may provide for more accurate link adaptation for IDMA.

Embodiments may better exploit the frequency diversity through the wireless channel, and better benefit the users with high mobility. A system applying embodiments may be able to exploit the gains of IDMA and FDMA in a concurrent manner.

Brief description of the Figures

Some embodiments of apparatuses and/or methods will be described in the following by way of example only, and with reference to the accompanying figures, in which

Fig. 1        illustrates an example of a unified frame structure;

Fig. 2        shows a schematic flow-chart of an example embodiment of a multiple access method for a wireless communication system;

Figs. 3a, b    illustrates a scenario for performance comparison of FDMA and IDMA;

Fig. 4        shows an example embodiment of link adaptation for Type II traffic, "single user" scheduling;

Fig. 5        shows an example embodiment of link adaptation for Type II traffic, "multi-user" scheduling;

Fig. 6        illustrates an example layer-adaptation control mechanism for IDMA with scheduled access;

Fig. 7        shows an example adjustment mechanism for retransmission probability;

Fig. 8        shows a performance comparison: OFDM-FDMA with QPSK vs. OFDM-IDMA with BPSK for 2 layers (left), and UFMC-FDMA with QPSK vs. UFMC-IDMA with BPSK for 2 layers (right); and

Fig. 9        shows a schematic block diagram of a base station according to an embodiment.

Description of Embodiments

Various example embodiments will now be described more fully with reference to the accompanying drawings in which some example embodiments are illustrated.

Accordingly, while example embodiments are capable of various modifications and alternative forms, embodiments thereof are shown by way of example in the drawings and will herein be described in detail. It should be understood, however, that there is no intent to limit example embodiments to the particular forms disclosed, but on the contrary, example embodiments are to cover all modifications, equivalents, and alternatives falling within the scope of the claims. Like numbers refer to like elements throughout the description of the figures. It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g.., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/ or "including," when used herein, specify the presence of stated features, integers, steps, operations, elements and/or components, but do not preclude the presence or addition of one or more other features, integers, steps, operations, elements, components and/ or group thereof.

It should also be noted that in some alternative implementations, the functions/ acts noted may occur out of the order noted in the figures. For example, two figures shown in succession may in fact be executed substantially concurrently or may sometimes be executed in the reverse order, depending upon the functionality/acts involved.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Portions of example embodiments and corresponding detailed description are presented in terms of software, or algorithms and symbolic representations of operation of data bits within a computer memory. These descriptions and representations are the ones by which those of ordinary skill in the art effectively convey the substance of their work to others of ordinary skill in the art. An algorithm, as the term is used here, and as it is used generally, is conceived to be a self-consistent sequence of steps leading to a desired result. The steps are those requiring physical manipulations of physical quantities. Usually, though not necessarily, these quantities take the form of optical, electrical, or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

In the following description, illustrative embodiments will be described with reference to acts and symbolic representations of operations (e.g., in the form of flowcharts) that may be implemented as program modules or functional processes including routines, programs, objects, components, data structures, etc., that perform particular tasks or implement particular abstract data types and may be implemented using existing hardware at existing network elements or control nodes. Such existing hardware may include one or more Central Processing Units (CPUs), Digital Signal Processors (DSPs), Application-Specific Integrated Circuits, Field Programmable Gate Arrays (FPGAs), computers, or the like.

Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

As disclosed herein, the term "storage medium", "storage unit" or "computer readable storage medium" may represent one or more devices for storing data, including Read Only Memory (ROM), Random Access Memory (RAM), magnetic RAM, core memory, magnetic disk storage mediums, optical storage mediums, flash memory devices and/ or other tangible machine readable mediums for storing information. The term "computer-readable medium" may include, but is not limited to, portable or fixed storage devices, optical storage devices, and various other mediums capable of storing, containing or carrying instruction(s) and/or data.

Furthermore, example embodiments may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a computer readable storage medium. When implemented in software, a processor or processors will perform the necessary tasks.

A code segment may represent a procedure, function, subprogram, program, routine, sub-routine, module, software package, class, or any combination of instructions, data structures or program statements. A code segment may be coupled to another code segment or a hardware circuit by passing and /or receiving information, data, arguments, parameters or memory contents. Information, arguments, parameters, data, etc. may be passed, forwarded, or transmitted via any suitable means including memory sharing, message passing, token passing, network transmission, etc.

It is anticipated that an important application for $5^{th}$ Generation (5G) systems will be Machine Type Communications (MTC) and the Internet of Things (IoT). The massive amount of machine-type devices may easily be one order of magnitude larger than human communication partners. At the same time, 5G may have to support high bit rate traffic with high spectral efficiency as well. The large number of MTC devices (a large fraction of them with sporadic traffic) may drive the need that 5G systems have to drop signaling overhead and support more energy-efficient communication than current systems do. For this kind of traffic, relaxing synchronicity requirements may help to avoid bulky random access procedures and battery-draining closed-loop timing advance control. For meeting the heterogeneous requirements of the different traffic types, a mix of scheduled and contention-based access within the same frame structure is envisaged.

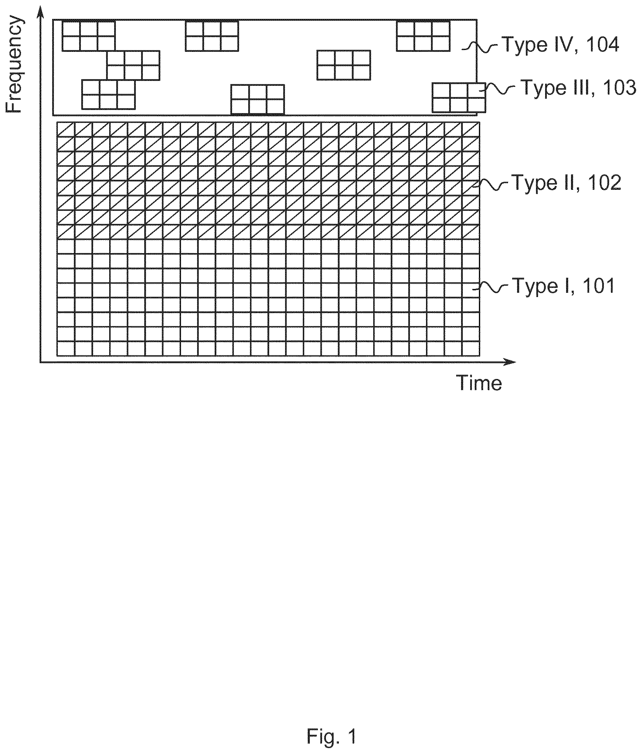

**Fig. 1** shows an example frame structure 100 for communication between base stations and mobile terminals of a wireless communication system. The illustrated frame structure 100 combines various data traffic types 101 to 104. Fig. 1 illustrates a time-frequency arrangement of physical radio resources which may be subdivided into physical time and frequency resources, as is generally known from multicarrier systems. Fig. 1 shows a time axis to the right and a frequency axis to the top. Moreover, Fig. 1 illustrates the four types of data traffic, namely 101 (Type I), 102 (Type II), 103 (Type III) and 104 (Type IV).

Type I data traffic 101 may correspond to higher amounts of data traffic or data packets, which are delay critical. Therefore Type I data traffic may correspond to closed-loop synchronized traffic in which a timing advance for uplink communication is measured at the base station and then communicated to the respective mobile terminal, for example, during an uplink random access procedure. That is to say, Type I denotes the resource area for highly synchronous bit-pipe traffic applying closed-loop synchronization like Long-Term Evolution (LTE) today, i.e. also employing orthogonality between subcarriers.

Type II data traffic 102 may also correspond to higher amounts of delay critical data traffic or data packets, however, in contrast to Type I with less accurate open-loop synchronization. Furthermore, no orthogonality between subcarriers is needed for Type II.

Type III data traffic 103 may correspond to smaller packets which are, at least to some extent, delay critical, such as e.g. low rate Machine-to-Machine (M2M) transmissions.

Type IV traffic 104 may correspond to data traffic, which is not delay critical and which may be spread over multiple radio frames, such as sensor transmissions.

Hence, Type III and IV may comprise M2M and/or sensor traffic for which (accurate) closed-loop synchronization may not be applied and instead applies (coarse) open-loop synchronization. No orthogonality between subcarriers is needed for Type III and IV.

That is to say, a bulk of data traffic (Type II, Type III, and Type IV) may be based on open-loop synchronization, i.e., there is no closed synchronization loop between mobile terminal and base station. For Type II, Type III, and Type IV data traffic mobile terminals may measure their offsets via downlink preambles, for example, and apply those measurements to their uplink data transmissions. A mobile terminal may wake up from sleep mode already some time before intended data transmission, listen to a downlink synchronization or pilot channel in order to get some initial time and/or frequency synchronization based on the downlink frame structure. For example, a Primary Synchronization Signal (PSS) and a Secondary Synchronization Signal (SSS) as known from LTE may be used for this.

For Type II, Type III and Type IV data traffic no costly feedback loop to the base station is required. However, for Type II to Type IV data traffic synchronization cannot be done perfectly, as the propagation or round trip delay between base station and mobile terminal cannot be measured this way and thus remains introducing signal distortions such as Inter-Carrier Interference (ICI) in a multicarrier communication system. With open-loop synchronization these residual relative delays between the uplink signals of different mobile terminals are typically higher than with closed-loop synchronization schemes.

For building up the flexible and scalable frame structure 100, multicarrier modulation may be regarded as an appealing technology. The well-known Orthogonal Frequency Division Multiplexing (OFDM) is used in many current systems and may be a candidate technology for it. On the other hand, OFDM is vulnerable to timing and frequency misalignments and will suffer from Inter-Carrier Interference (ICI). To overcome this problem, filtered multi-carrier may help reducing spectral side-lobe levels and will be thus more robust against ICI. Filter-Bank-based Multi-Carrier (FBMC), in its main realization of Staggered Multi-Tone (SMT), is probably one of the main candidate technologies. As it has drawbacks for short bursts, embodiments of the present disclosure may, beside the two aforementioned multicarrier modulation techniques, be also used in conjunction with a waveform approach called Universal Filtered Multi-Carrier (UFMC).

UFMC can be considered as a generalization of filtered OFDM and FBMC. While filtered OFDM uses filtering for the entire frequency band covering all subcarriers and FBMC uses a filtering per subcarrier, UFMC relies on filtering on a per sub-band basis, for a group of subcarriers, e.g. a Physical Resource Block (PRB) in the LTE terminology.

According to the UFMC concept, a time-domain transmit vector $\mathbf{X}_k$ for a particular multi-carrier symbol of user k is a superposition of sub-band-wise filtered components, with filter length $L$ and Fast Fourier Transform (FFT) length $N$, and can be represented by

$$\underbrace{\mathbf{x}_k}_{[(N+L-1)\times 1]} = \sum_{i=1}^{B} \underbrace{\mathbf{F}_{i,k}}_{[(N+L-1)\times N]} \cdot \underbrace{\mathbf{V}_{i,k}}_{[N\times n_i]} \cdot \underbrace{\mathbf{s}_{i,k}}_{[n_i\times 1]} . \tag{1}$$

For the $i$-th sub-band ($1 \leq i \leq B$), $n_i$ complex modulation symbols (e.g. Quadrature Amplitude Modulated (QAM) symbols) may be transformed to time-domain by Inverse Discrete Fourier Transform (IDFT)-matrix $\mathbf{V}_{i,k}$, which includes the relevant columns of the inverse Fourier matrix according to the respective sub-band position within the overall available frequency range. $\mathbf{F}_{i,k}$ denotes a Toeplitz matrix, composed of the filter impulse response, performing the linear convolution. Note that UFMC here does not need a Cyclic Prefix (CP), but has an inherent "soft" Inter-Symbol-Interference (ISI) protection, due to the filter ramp-up and ramp-down at the beginning and the end of a symbol.

An UFMC receiver can use some optional time-domain pre-processing, e.g. a frequency offset compensation by continuous phase rotations in time. In principle also matched filtering could be done, but as this would imply sub-band-specific processing due to the filters matched on each sub-band filter. A next receiver processing act may be a $2N$-point FFT for realizing a frequency domain processing receiver with

$$\tilde{\mathbf{Y}} = \mathrm{FFT}\left\{[\mathbf{y}^T, 0, \ldots, 0]\right\}, \tag{2}$$

where $N - L - L_{CIR} + 1$ zeros may be appended. Here, $L_{CIR}$ denotes the length of the channel impulse response. Each second subcarrier point may be discarded to get the length $N$ frequency-domain receive signal Y.

In case of single user reception, e.g. pure Frequency Division Multiple Access (FDMA) reception, an UFMC receiver may be based on a simple scalar equalization per subcarrier. A symbol estimate for subcarrier $n$ is just $Y_n/(H_{k,n}F_{k,n})$, with $H_{k,n}$ being the complex scalar channel transfer function coefficient and $F_{k,n}$ the filter frequency response of the sub-band of interest $i$, belonging to the respective subcarrier $n$.

Having described potentially underlying multicarrier modulation techniques, let us now turn to multiple access methods. Multiple access allows several user terminals connected to the same transmission medium to communicate over it and to share its capacity.

The multiple user uplink scenario is the information-theoretic Multiple Access Channel (MAC) problem. The capacity can be described in a two-user rate region. A classical and simple approach is FDMA. The FDMA channel-access scheme is based on the Frequency-Division Multiplexing (FDM) scheme, which provides different frequency bands to different data-streams or users. While FDMA can achieve the single-user corner points of this rate region, its hull can in general only be achieved when the multiple users transmit simultaneously using joint decoding. In order to exploit this point, a multiple access scheme different to FDMA is required, for example Interleave-Division Multiple Access (IDMA). In L. Ping, L. Liu, K. Wu and W.K. Leung, "Interleave-Division Multiple-Access," IEEE Trans. Wireless Commun., Vol. 5, No. 4, pp. 938-947, Apr. 2006, a new concept, IDMA was proposed by Li Ping et al. Being recognized by both L. Ping, L. Liu, K. Wu and W.K. Leung, "Interleave-Division Multiple-Access," IEEE Trans. Wireless Commun., Vol. 5, No. 4, pp. 938-947, Apr. 2006 and K. Kusume, G. Bauch and W. Utschick, "IDMA vs. CDMA: Analysis and Comparison of Two Multiple Access Schemes," IEEE Trans. Wireless Commun., Vol. 11, No. 1, pp. 78-87, Jan. 2012, the corresponding receiver, denoted as Elementary Signal Estimator (ESE) by Li Ping et al. or denoted as soft rake detector by Kusume et al., turns out to be simple and effective.

For one or more wireless users embodiments propose to switch between appropriate multiple access schemes, IDMA and FDMA, based on the observation of one or more radio link characteristics, such as, for example, user mobility, pathloss, interference due to signals coming from other users, the sensitivity of the receiver, the available transmitter power margin, etc. Hence, embodiments propose a link adaptation mechanism by choosing for one or more users the appropriate multiple access scheme, IDMA and FDMA, best fitting to current radio link characteristics.

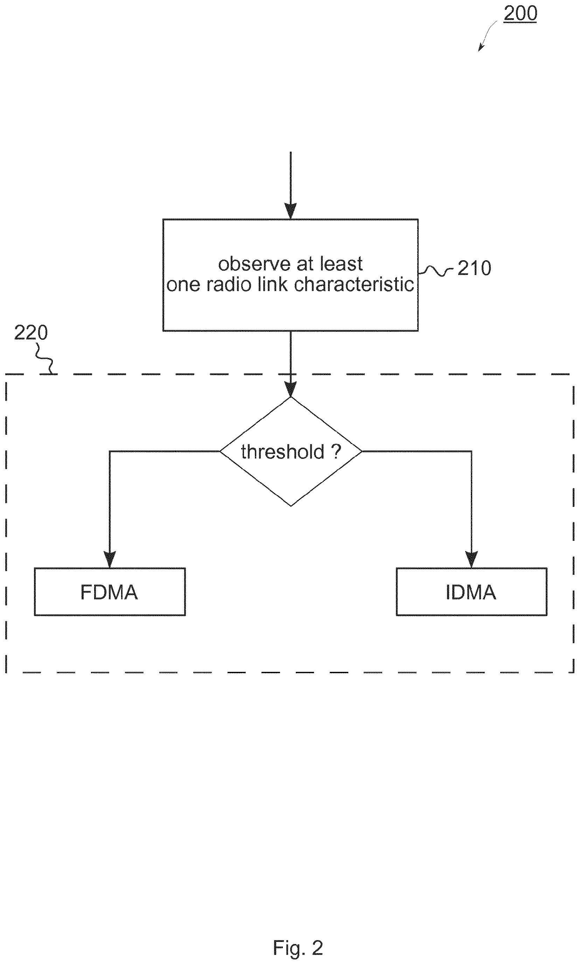

**Fig. 2** illustrates a schematic flow-chart of an example multiple access method 200 for a plurality of wireless users of a wireless communication system.

The method 200 comprises an act 210 of observing at least one radio link characteristic or radio link characteristic for at least one of the plurality of wireless users. Thereby, the at least one radio link characteristic may be indicative of the quality of the radio link. Observing one or more radio link characteristics may be done for each of the plurality of users.

In an act 220 the method 200 comprises, based on the at least one observed radio link characteristic, switching or changing between FDMA and IDMA as the multiple access scheme for the at least one wireless user. Thereby, for each user the better fitting multiple access scheme may be chosen.

In some embodiments, the observed at least one radio link characteristic or parameter may be at least one of the group comprising user mobility, user receive and/or transmit power capabilities, experienced interference, user asynchronicity, etc. If threshold values associated to the observed radio link characteristics are exceeded or underrun, FDMA or IDMA is selected as the multiple access scheme for one or more of the plurality of wireless users. That is to say, in embodiments FDMA and IDMA may coexist as multiple access techniques in the wireless communication system. While some users employ FDMA, other users of the plurality of wireless users may use IDMA. Thereby the association between a user and a multiple access technique may vary over time depending on the radio link characteristics.

The skilled person will appreciate that various embodiments of the method 200, which will be described in the following, may be performed by network entities, such as base stations, for example.

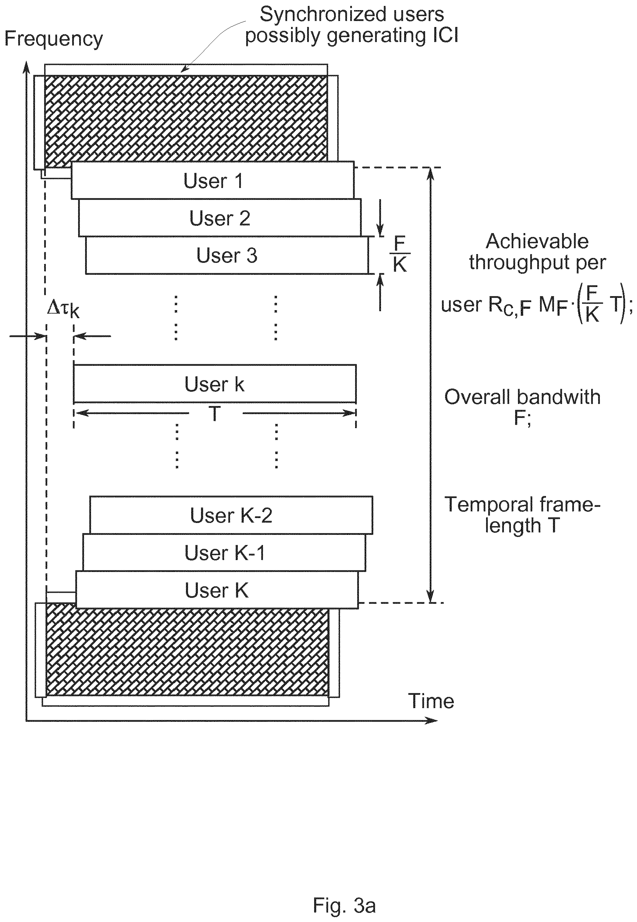

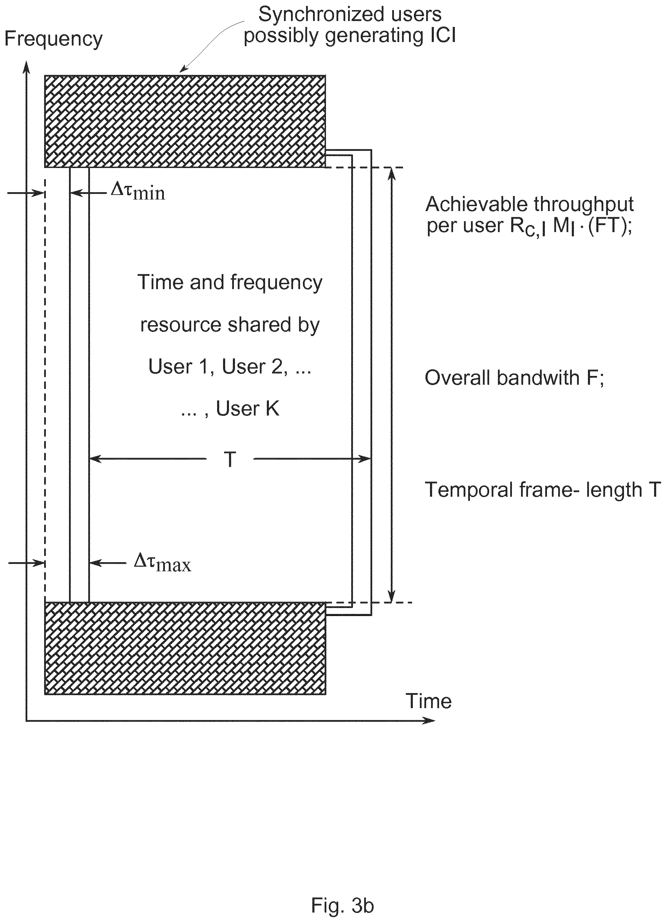

Turning now to **Figs. 3a, b**, it is presented a scenario for performance comparison between the multiple access methods FDMA and IDMA.

In the FDMA scheme schematically illustrated in Fig. 3a, each user is allocated to a relatively narrow frequency bandwidth $F/K$, considering an FEC rate $R_c$, a temporal frame-length $T$, and mapping $M_F$ bits to a modulated symbol. Obviously the timing offset $\Delta\tau_k$ and Carrier Frequency Offset (CFO) can introduce Inter-Carrier-Interference (ICI). The achievable throughput per user is $R_c M_F * (F/K*T)$. FDMA is well accepted by many wireless communication standards. However, it is supposed to be not good enough in certain operation points due to the following reasons:

- The users suffers from relatively high ICI.
- A frequency selective channel can damage complete frame of a user, if deep fading appears.
- For users with high mobility, a regular scheduling approach cannot deliver robust performance.
- Very complex scheduling procedures and channel feedback mechanisms are required.

Therefore, embodiments propose a link adaptation solution for the aforementioned unified frame structure 100, for example allowing IDMA besides FDMA for the scheduled traffic type.

In Fig. 3b, an asynchronous IDMA system with K users is illustrated. In IDMA, the plurality of users can share the complete time-frequency resources, within the temporal frame-length T and the frequency band F. The FEC code rate is denoted as $R_{c,I}$, and a modulator maps $M_I$ bits to a modulation symbol. The achievable throughput per user is thus $R_{c,I}M_I(FT)$. Comparing Fig. 3a to Fig. 3b, if both FDMA and IDMA are expected to achieve equivalent throughput for each user, it holds

$$R_{c,F}M_F \cdot \left(\frac{F}{K}T\right) \overset{!}{=} R_{c,I}M_I \cdot (FT). \tag{3}$$

Note that we have the degrees of freedom to adjust the parameters $R_c$, $M_F$, $M_I$, $K$ and $R_r$. If the same modulation scheme is taken into account for both FDMA and IDMA, namely $M_I = M_F$, equation (3) yields

$$R_{c,I} = \frac{R_{c,F}}{K} \tag{4}$$

It indicates that a low-rate FEC code can be achieved, if multiple users K are considered. Additionally, a low-rate FEC code is preferred by IDMA and thus is expected to deliver robust performance. A low FEC code rate, e.g. $R_{c,I} \leq 1/3$, may also be achieved by introducing more signal layers to one IDMA user, i.e., the users signal stream is subdivided among more than one interleaver.

If the same FEC code rate is taken into account for both FDMA and IDMA, namely $R_{c,I} = R_{c,F}$, equation (3) yields

$$M_I = \frac{M_F}{K}. \tag{5}$$

This shows that a low-order modulation scheme can also be selected in conjunction with the IDMA scheme.

It is expected that IDMA can outperform FDMA in some scenarios due to following reasons:

- Each user suffers from relatively low ICI from the synchronized users, because of spectrally wide data burst.
- High frequency diversity gain can generally improve the performance.

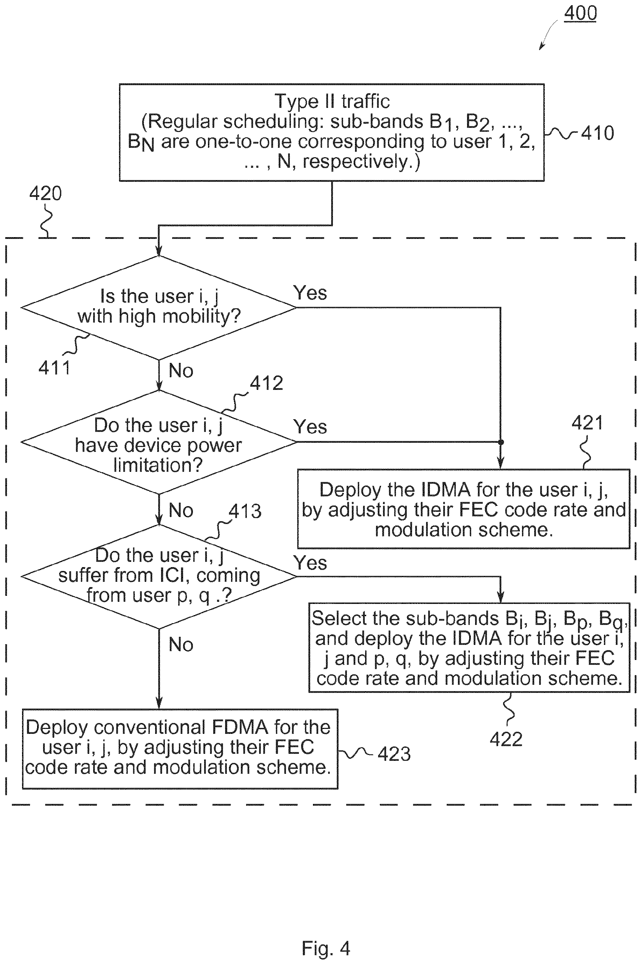

**Fig. 4** illustrates an example embodiment of a multiple access selection method 400, assuming underlying multicarrier modulation (e.g. OFDM or UFMC) and Type II traffic. Here, the regular "single user" scheduling is assumed, such as presented in Fig. 3a.

In act 410 of method 400, one or more radio link characteristics for type II traffic for a plurality of $N$ users scheduled in $N$ sub-bands $B_1$, $B_2$, ..., $B_N$ are observed, respectively. In a further act 420, for each user one of FDMA or IDMA may be selected as multiple access scheme based on the at least one observed radio link characteristic.

Basically, a switch or change criterion may correspond to the situation when a frequency diverse scheduling has to take into account whether adequate diversity gain can be expected. For instance, as provided in Fig. 4, some aspects can play important roles, to start the initialization of IDMA, such as:

- High mobility, which can cause erroneous detection, due to high frequency selectivity of wireless channel, if the user is individually detected within a conventional FDMA system. With high mobility frequency selective gains cannot be exploited. Instead the system needs to rely of frequency diversity.
- Device power limitation, which makes the user sensitive to noise and potential interference.
- High ICI is recognized for the individual users.

As denoted by reference numeral 411, observing the at least one radio link characteristic or parameter may comprise, e.g. for each of the plurality of wireless users, verifying whether the respective user experiences mobility above a predefined mobility threshold. User mobility may be estimated based on various approaches. For example, a frequency of handovers may be taken into account, Doppler spreads, etc. If the mobility threshold is exceeded for the monitored user, IDMA may be used as multiple access scheme for said user by adjusting his respective FEC code rate and his modulation scheme (see act 421). Note that using IDMA as multiple access scheme may comprise using a lower FEC code rate and/or a lower-order modulation scheme than used for FDMA as multiple access scheme.

If, on the other hand, the experienced or observed mobility of a user falls below the mobility threshold (e.g. low-mobility user), it may additionally be monitored whether the user has certain device power limitations, i.e., whether a receive power and/or transmit power capability of the user falls below a predefined power threshold (see act 412). This may be the case if not enough power amplification is available, for example. If the latter is the case, i.e., the user has device power limitations, IDMA may be used for said user by adjusting his respective FEC code rate and his modulation scheme (see act 421). Note that a wireless device's device power limitations or capabilities may be indicated to the wireless network during an initial access procedure of the wireless device.

If, on the other hand, the user's device power limitations exceed the power threshold, it may additionally be monitored whether the user suffers from Inter-Carrier Interference (ICI) from one or more other users above a predefined ICI threshold (see act 413). For this purpose, a Signal-to-Interference Ratio (SIR) may be evaluated, for example. If ICI above the predefined ICI threshold is the case, IDMA may be deployed for the user $(i, j)$ and the other interfering users $(p, q)$ by using the radio resources of their respective sub-bands $B_i$, $B_j$, $B_p$, $B_q$ and by adjusting their respective FEC codes rates and their modulation schemes (see act 422).

For those users for which all of the monitoring or checks 411, 412, and 413 have been answered with "No", conventional FDMA may be used as multiple access scheme (see reference sign 423). Note that also other example implementations are possible. For example, FDMA may also be selected as multiple access scheme for a user, if only one or more of the checks or monitorings 411, 412, and 413 have been answered with "No" for said user. Also note that the aforementioned acts may be performed for each of the plurality of wireless users, either in parallel or subsequently.

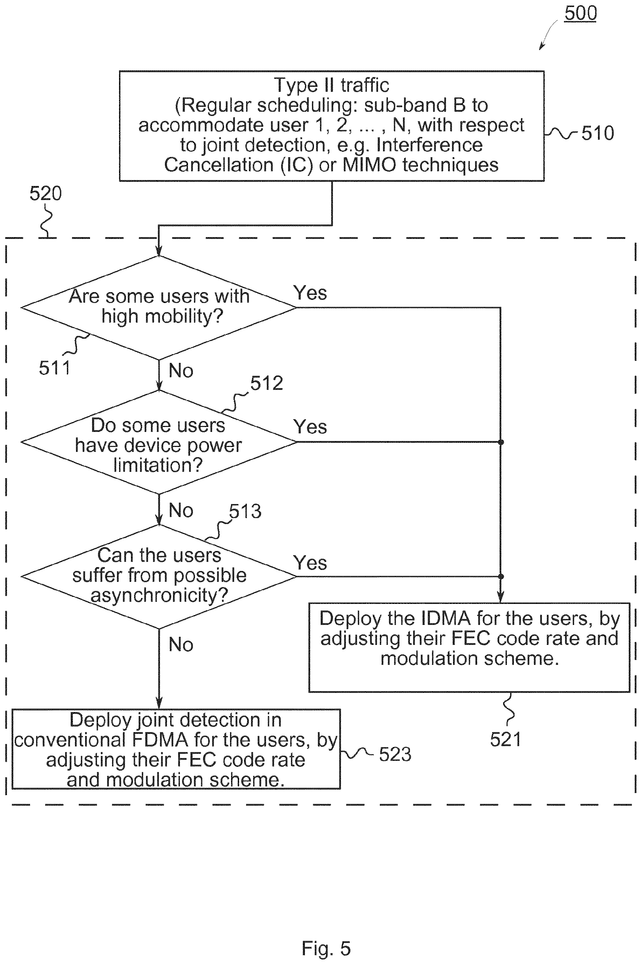

**Fig. 5** illustrates another example embodiment of a multiple access selection method 500, assuming underlying multicarrier modulation (e.g. OFDM or UFMC) and Type II traffic. Here, "multi-user" scheduling is assumed.

In act 510 of method 500, one or more radio link characteristics for type II traffic for a plurality of $N$ users scheduled in a common sub-band $B$ are observed. The "multi-user" scheduling may be based on Multiple-Input Multiple-Output (MIMO) techniques, for example. In act 520, one of FDMA or IDMA is selected as the multiple access scheme for at least one of the wireless users based on the at least one observed radio link characteristic.

In the example embodiment of Fig 5 the following is taken into account:

- High mobility, which can make the channel estimation within a MIMO system hardly achievable;
- Device power limitation, which can degrade the MIMO performance at low Signal-to-Noise ratio (SNR);
- Additionally, possible asynchronicity of the multiple users can be another important switch criterion, to initialize IDMA.

As denoted by act 511, observing the at least one radio link condition or parameter may comprise verifying whether the plurality of $N$ wireless users or a part thereof experience user mobility above a predefined mobility threshold. If the mobility threshold is exceeded for at least one of the $N$ users (high mobility users), IDMA may be used as multiple access scheme for the at least one user by adjusting his FEC code rate and modulation scheme (see act 521). Note that using IDMA as multiple access scheme may comprise using a lower FEC code rate and/or a lower-order modulation scheme than used for FDMA as multiple access scheme.

If, on the other hand, the experienced mobility of the plurality of $N$ users or a part thereof falls below the mobility threshold (low mobility users), it may additionally be monitored whether at least one of those users has certain device power limitations, i.e., whether a receive power and/or transmit power capability of the at least one user falls below a predefined power threshold (see act 512). If the latter is the case (low power devices), ID-MA may be used for the at least one user by adjusting his FEC codes rate and his modulation scheme (see act 521).

If, on the other hand, the monitored users' device power limitations exceed the power threshold (high power devices), it may additionally be monitored whether at least one of those users can suffer from or cause asynchronous status or asynchronicity above a predefined temporal asynchronicity threshold (see act 513). If the latter is the case, IDMA may be deployed for the at least one user by adjusting his respective FEC codes rates and his modulation schemes (see act 521). Note that information on a wireless user's (a)synchronicity capabilities may be indicated to the network during an initial access procedure, for example.

For those users for which all of the monitoring or checks 511, 512, and 513 have been answered with "No", conventional FDMA and joint detection may be used (see reference sign 523). Note that using FDMA as multiple access scheme may comprise using a higher FEC code rate and/or a higher-order modulation scheme than used for IDMA as multiple access scheme. The skilled person will appreciate that also other example implementations are possible.

In case of scheduled access, a number of signal layers and/or users to be used in IDMA may be controlled by the base station, thus the number of layers/users which are superimposed on the same time-frequency resources. While an initial or first choice may be balanced out by computer-simulations and stored in a Look-Up Table (LUT), for example, varying channel conditions and additional practical impairments may require that adjustments in this LUT have to be made, regarding the right number of layers to choose.

In some embodiments, using IDMA as the multiple access scheme for at least one of the plurality of wireless users may comprise adjusting a number of IDMA layers/users interleave division multiplexed on the same time-frequency radio resources based on observing a current error rate. In one embodiment, the error rate may be an uplink Block Error Rate (BLER). The number of IDMA layers/users may be reduced, if the observed current error rate exceeds a target error rate. The number of IDMA layers/users may be increased, if the observed current error rate falls below the target error rate.

In one embodiment, a base station may observe its ACK/NACK results for uplink reception and check whether a desired BLER operation point, e.g. offering maximal throughput, is achieved. In case the observed BLER gets too high, a layer controller entity in a scheduler may reduce the number of IDMA layers, e.g. by reducing the number of users scheduled on the same time-frequency resources. Otherwise, if the observed BLER gets too small (e.g. 0, indicating that additional layers could be handled by the receiver), the number of layers may be increased. Resulting adjustments in the number of used layers may be stored as adjustments in the above-mentioned LUT.

In order to simplify this process, the following special option may be used in one embodiment: All users use identical Modulation and Coding Schemes (MCS), e.g. with Quadrature Phase-Shift Keying (QPSK) and low-rate FEC codes. In case a user shall be assigned higher throughput (e.g. supported by better radio channel conditions), it may simply increase the number of transmission layers.

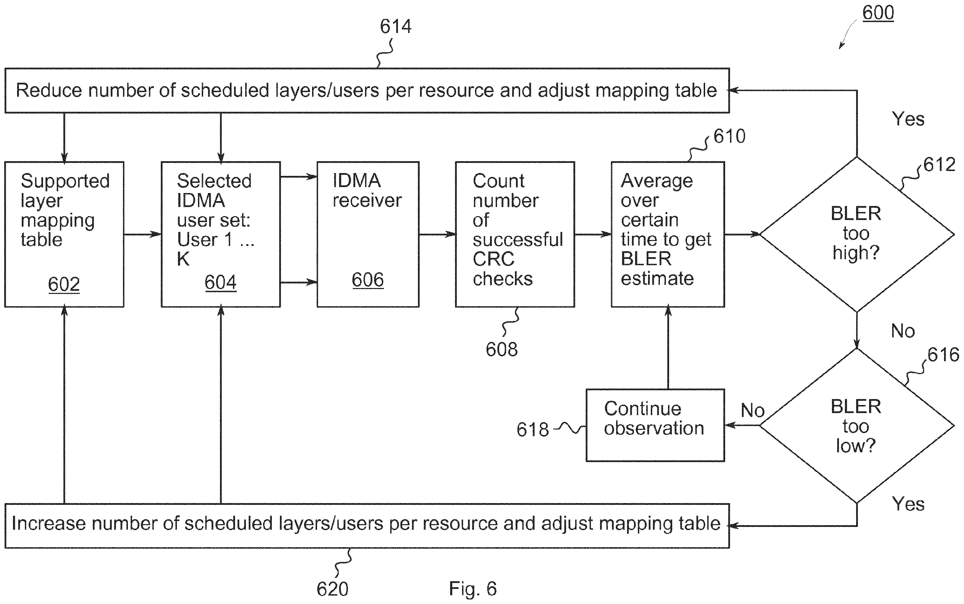

**Fig. 6** illustrates an example layer-adaptation control mechanism 600 for IDMA with scheduled access.

Based upon a pre-configured mapping table 602 a base station may decide for the number of layers being supported and decide for the respective IDMA user set, 604. Then, after signal reception with an IDMA receiver 606 and a Cyclic Redundancy Check (CRC) detector the number of successful CRC checks may be counted, 608. Based upon an actual BLER e.g. being related to an average of the ratio of erroneous and successful CRC checks over a given period of time in act 610 and a target BLER, the base station may follow the following paths:

- Actual BLER > target BLER (act 612)? If yes →reduce number of layers (act 614) and update the relevant processing blocks
- Actual BLER > target BLER (act 612)? If no → Actual BLER < target BLER (act 616)? If no → Continue observation, i.e. make no changes (act 618).
- Actual BLER > BLER target (act 612)? If no → Actual BLER < BLER target (act 616)? If yes → Increase number of layers and update the relevant processing blocks (act 620).

In Husain Nizamuddin, André F. dos Santos, Thorsten Wild, "A Random Access and Multiuser Detection Approach for Massive Access of Low-Complexity Machine Communications in cellular networks," submitted to IEEE WCNC'14, Apr. 2014, basic mechanisms for multi-user contention based access are presented. Mobile stations (Devices/Users/Machines) may re-transmit previously failed packets with probability $p_R$. This re-transmission probability is a design parameter for collision resolution which may be optimized. A user having a re-transmission probability $p_R = 1$ will for sure initiate a re-transmission of a previously failed packet in the next possible re-transmission slot. A user having a re-transmission probability $p_R = 0.5$ will with a probability of 50 % initiate a re-transmission of a previously failed packet in the next possible re-transmission slot. That is to say, the lower the re-transmission probability then longer it may take until the re-transmission of the previously failed packet. Lower probabilities are causing higher delays but are "smoothing out" the number of simultaneously colliding users in bursty situations.

For some embodiments, it is proposed to use IDMA also for contention-based access.

A base station may tune the re-transmission probability $p_R$ such as to get as close as possible to a desired number of signal layers. For example via downlink control signaling, it may inform the users on their respective $p_R$ they shall use. In case of retransmissions, users may now use the latest re-transmission probability $p_R$ set by the base station. This may impact the probability distribution of the number of potentially colliding users. In this way the base station may adjust the system such that potentially as many collisions occur as its receiver can reasonably handle.

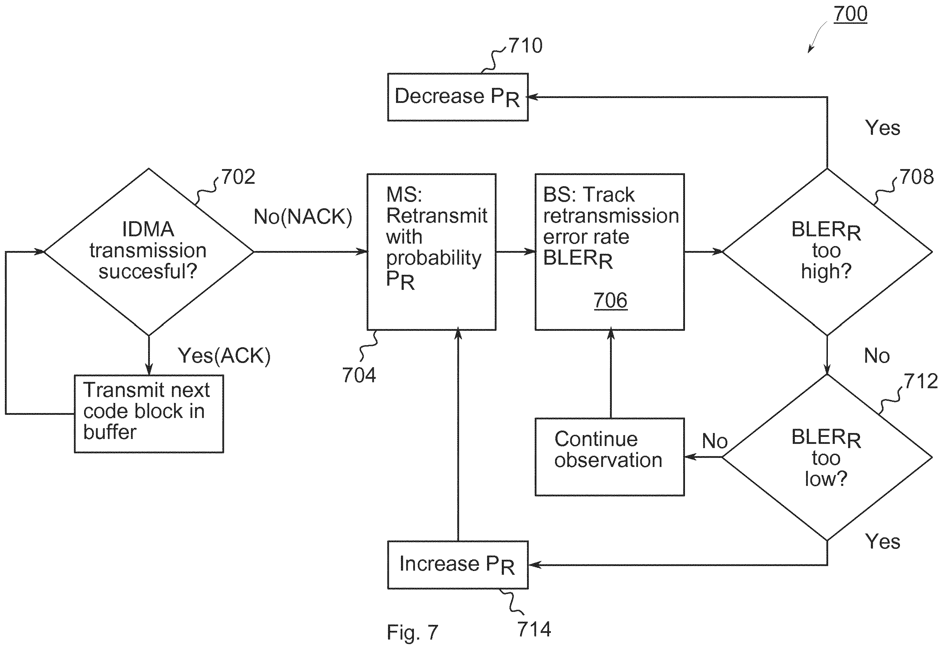

According to the example embodiment illustrated in **Fig. 7,** the collisions of HARQ-retransmissions are handled by adjusting a retransmission probability $p_R$.

In act 702 a Base Station (BS) verifies whether a received IDMA transmission from a Mobile Station (MS) has been received successfully. In case the MS receives a negative-acknowledge (NACK) message from the BS resulting from verification act 702, it may randomly check for each subframe whether a retransmission is to be made (see act 704). This random check 704 is based on probability $p_R$. In case the collisions are happening in bursts at the BS, the BS may apply the method illustrated in Fig. 7. The BS may track the retransmission error rate $BLER_R$ in act 706. In case the retransmissions from the mobile stations fail too often ($BLER_R$ too high, act 708), too many IDMA layers or users are active at the same time. The collisions and hence the retransmission error rate may be controlled by indicating via forward control signaling or broadcast information from BS to MS that the retransmission probability $p_R$ should be reduced, see act 710. This may stretch retransmission events over time, smooth out the bursts and may thus reduce the maximum number of active IDMA layers, leading to better retransmission error rates at the price of higher latency on average. In case the retransmission BLER is too low, e.g. zero, (act 712), the system can be tweaked to operate with lower latency. Here, the BS can increase $p_R$ (see act 714) resulting statistically in a larger number of maximum IDMA layers/users for the contention-based access. As the retransmission happens earlier on average, the average latency of the system is reduced.

To summarize Fig. 7, using IDMA as the multiple access scheme for the at least one wireless user may comprise adjusting a HARQ retransmission probability for the at least one wireless user based on observing a current retransmission error rate $BLER_R$. The HARQ-retransmission probability may be decreased, if the observed retransmission error rate exceeds a retransmission error rate threshold, and the HARQ-retransmission probability may be increased, if the observed retransmission error rate falls below the retransmission error rate threshold. While HARQ may be more relevant, a 5G system with low end devices, Multi-User Detection (MUD) and a large number of collisions may also make use of full ARQ retransmissions instead of exploiting HARQ, as this might be easier to realize with MUD and less complex at the device side.

To illustrate some benefits of embodiments, uplink link level simulations for two users of interest have been conducted, in order to compare different combinations of multi-carrier waveform solutions and multiple access schemes, such as OFDM-FDMA, OFDM-IDMA, UFMC-FDMA and UFMC-IDMA. In Table I, example simulation parameters are summarized.

TABLE I

| LINK LEVEL SIMULATION PARAMETERS | |
|---|---|
| Multi-carrier symbols per TTI | 9 |
| FFT size | $N$ = 1024 |
| Subcarrier spacing | 15 kHz |
| Filter length | $L$ = 80 |
| Filter sideband attenuation | 40 dB |
| Subband size | $N_{PRB}$ = 12 |
| Allocation size for user of interest (FDMA/IDMA) | 5/10 subbands |
| Allocation size for adjacent users | 9 subbands |
| Detector type | FFT based (no time deomain pre-processing) |
| Carrier frequency | 2 GHz |
| Carrier Frequency Offset (CFO) | Not applied |
| Relative delays of adjacent users | $\Delta N \in (0, 0.45)$ |
| Channel model | i.i.d. Rayleigh (block fading); Pedestrian B 3km/h |
| Modulation schemes | BPSK, QPSK, 16QAM |
| Number of IDMA iterations | 5 |
| Number of FDMA/IDMA users | 2 |
| Repetition rate for IDMA $R_r$ | 1 |
| FEC realization | DVB-S2, LDPC decoder |
| FEC rate $R_c$ | 1/4, 3/4 |
| Iterations in LDPC decoder | 50 |

In particular, the Low Density Parity Check (LDPC) code specified in the second generation satellite Digital Video Broadcasting (DVB-S2), ETSI; "Digital Video Broadcasting (DVB): Second Generation Framing Structure, Channel Coding and Modulation for Broadcasting, Interactive Services, New Gathering and Other Broadband Satellite Applications," Standard, EN 302 307 (V1.1.1), Jun. 2004, has been adopted to enhance the channel coding for IDMA.

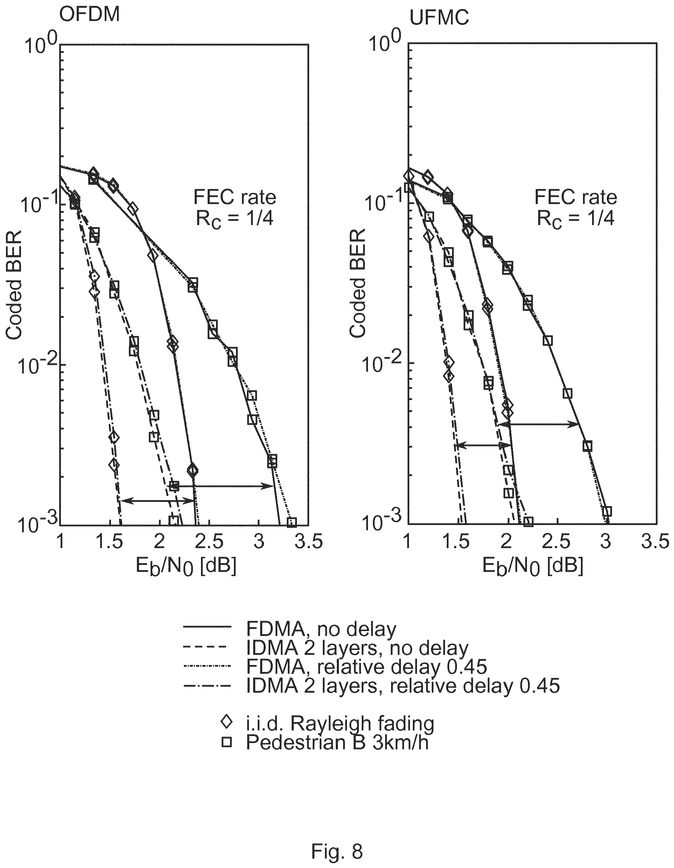

In **Fig. 8,** the FDMA and IDMA related schemes are QPSK and BPSK modulated, respectively, so that the two-user overall achievable throughput is equivalent for both schemes. In order to consider the influence by delay, we specify a definition "relative delay" $\Delta N$, given by

$$\Delta N = \frac{N_{\text{delay}}}{N + \underbrace{L - 1}_{L_{\text{CP}}}} , \qquad (6)$$

where $N_{delay}$ denotes delay in time-domain with respect to number of samples. It can be observed that IDMA turns out to be the better solution for lower code rates (e.g. 1/4), and outperforms FDMA by roughly 1~2 dB (at coded BER 10-3). One of the most important reasons to understand the gain is that the IDMA can potentially exploit frequency diversity due to wider frequency allocation size, as depicted in Fig. 3b, and suffers thus less from ICI from adjacent users. Notice that the loss of FDMA scheme under Pedestrian B channel is bigger than that of IDMA scheme. This is an indirect evidence that IDMA scheme is capable of better collecting frequency diversity gain. Due to the computational limitation for the numerical simulation, we do not consider the framing for K > 2 users. Nevertheless, significant performance enhancement can be expected, if more users are involved in the framing, so that the potential frequency diversity will further increase the performance gain between IDMA and FDMA.

Additionally, for low code rates in both multiple access schemes, UFMC slightly outperforms OFDM.

From these results it seems that UFMC is a candidate scheme potentially capable of replacing OFDM. For users transmitting with low code rates, IDMA is preferable over FDMA and can be combined well with UFMC. Even when users are in low-rate operation points, where UFMC gains are not large over OFDM, the filters help to protect neighbor users from ICI and provide additional benefits, like increased suitability to fragmented spectrum.

Throughout this disclosure, equal power per user is assumed, which is the best case for ICI and cannot always be guaranteed for contention-based access. In unbalanced power situation, ICI robustness becomes more important, thus UFMC gain will be much stronger.

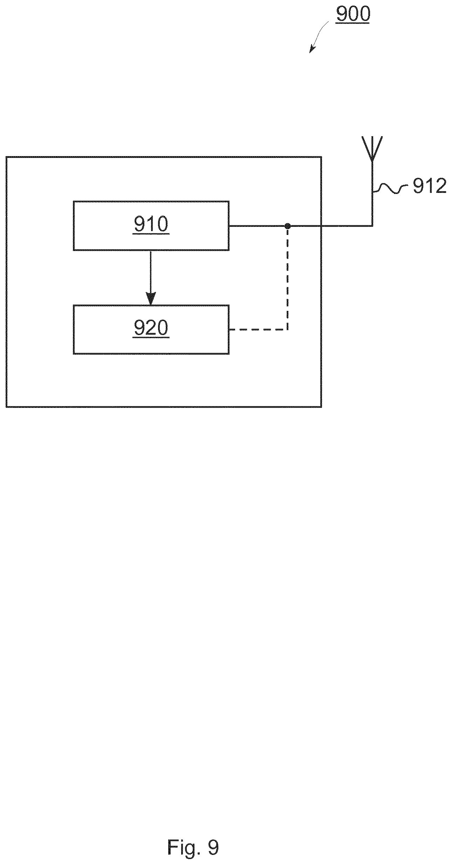

Embodiments of the methods described herein may be performed by a network entity, such as a base station, for example. A schematic block diagram of a base station 900 is illustrated in **Fig. 9.**

Base station 900 includes circuitry 910 configured to observe at least one radio link characteristic for at least one of the plurality of wireless users. Further, base station 900 includes switching circuitry 920 configured to switch, based on the at least one observed radio link characteristic, between FDMA and IDMA as the multiple access scheme for the at least one wireless user.

The person having benefit from the present disclosure will appreciate that circuitry 910, 920 may include analog and/or digital hardware components configured to perform embodiments of the methods described herein. For example, circuitry 910 may include receiver circuitry (e.g. including antenna 912) and digital baseband processing circuitry. Circuitry 920 may include digital baseband processing circuitry and transmitter circuitry (e.g. including antenna 912), for example.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks shall be understood as functional blocks comprising circuitry that is adapted for performing a certain function, respectively. Hence, a "module or entity for s.th." may as well be understood as a "module or entity being adapted or suited for s.th.". A module or entity being adapted for performing a certain function does, hence, not imply that such means necessarily is performing said function (at a given time instant).

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

Further, it is to be understood that the disclosure of multiple acts or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

**Claims**

1. A method (200; 400; 500) for a wireless communication system, the wireless communication using at least one multiple access scheme for a plurality of wireless users, the method comprising:

   observing (210; 410; 510) at least one radio link characteristic for at least one of the plurality of wireless users; and based on the at least one observed radio link characteristic, switching (220; 420; 520) between Frequency Division Multiple Access, FDMA, and Interleave Division Multiple Access, IDMA, as the multiple access scheme for the at least one wireless user.

2. The method (200; 400; 500) of claim 1, wherein observing (210; 410; 510) the at least one radio link characteristic comprises verifying (411; 511) whether the at least one wireless user experiences user mobility above a predefined mobility threshold.

3. The method (200; 400; 500) of claim 2, comprising using IDMA for the at least one wireless user (421; 521), if the mobility threshold is exceeded, or using FDMA for the at least one wireless user (423; 523), if the user's experienced mobility falls below the mobility threshold.

4. The method (200; 400; 500) of claim 1, wherein observing (210; 410; 510) the at least one radio link characteristic comprises verifying (412; 512) whether a receive power capability and/or transmit power capability of the at least one wireless user falls below a predefined power threshold.

5. The method (200; 400; 500) of claim 4, comprising using FDMA for the at least one wireless user, if the power threshold is exceeded, or using IDMA for the at least one wireless user, if the user's receive and/or transmit power capability falls below the power threshold.

6. The method (200; 400; 500) of claim 1, wherein observing (210; 410; 510) the at least one radio link characteristic comprises verifying (413) whether the at least one wireless user experiences Inter-Carrier Interference, ICI, from at least one other wireless user above a predefined ICI threshold.

7. The method (200; 400; 500) of claim 6, comprising using IDMA for the at least one wireless user and the at least one other wireless user, if the ICI threshold is exceeded, or using FDMA for the at least one wireless user and the at least one other wireless user, if the user's experienced ICI falls below the ICI threshold.

8. The method (200; 400; 500) of claim 1, wherein observing (210; 410; 510) the at least one radio link characteristic comprises verifying (513) whether the at least one wireless user experiences temporal asynchronous status above a predefined asynchronicity threshold.

9. The method (200; 400; 500) of claim 8, comprising using IDMA for the at least one wireless user (521), if the asynchronicity threshold is exceeded, or using FDMA for the at least one wireless user (523), if the user's experienced asynchronous status falls below the asynchronicity threshold.

10. The method (200; 400; 500) of claim 1, wherein using IDMA as the multiple access scheme comprises adjusting a number of IDMA users or layers multiplexed on the same time-frequency radio resources based on observing a current error rate (608; 610).

11. The method of claim 10, wherein the number of IDMA users or layers is reduced (614), if the observed current error rate exceeds a target error rate (612), and wherein the number of users is increased (620), if the observed current error rate falls below the target error rate (616).

12. The method of claim 1, wherein using IDMA as the multiple access scheme comprises adjusting an Automatic Repeat Request, ARQ, retransmission probability for the at least one wireless user based on observing (706) a current retransmission error rate.

13. The method of claim 12, wherein the ARQ-retransmission probability is decreased (710), if the observed retransmission error rate exceeds a retransmission error rate threshold (708), and wherein the ARQ-retransmission probability is increased (714), if the observed retransmission error rate falls below the retransmission error rate threshold (712).

14. The method of claim 1, wherein using IDMA as the multiple access scheme for the plurality of wireless users comprises using a lower Forward Error Correction, FEC, code rate and/or a lower-order modulation scheme than used for FDMA as the multiple access scheme for the plurality of wireless users.

15. Apparatus (900) for a wireless communication system, the wireless communication using at least one multiple access scheme for a plurality of wireless users, the apparatus comprising:

circuitry (910) configured to observe at least one radio link characteristic for at least one of the plurality of wireless users; and
switching circuitry (920) configured to switch, based on the at least one observed radio link characteristic, between Frequency Division Multiple Access, FDMA, and Interleave Division Multiple Access, IDMA, as the multiple access scheme for the at least one wireless user.

**Patentansprüche**

1. Verfahren (200; 400; 500) für ein drahtloses Kommunikationssystem, wobei das drahtlose Kommunikationssystem mindestens ein Mehrfachzugangsschema für eine Vielzahl drahtloser Benutzer benutzt, wobei das Verfahren umfasst:

das Beachten (210; 410; 510) mindestens einer Funkverbindungseigenschaft für mindestens einen aus der Vielzahl drahtloser Benutzer; und
auf der Grundlage der mindestens einen beachteten Funkverbindungseigenschaft das Umschalten (220; 420; 520) zwischen Frequenzmultiplexzugriff (Frequency Division Multiple Access, FDMA) und dem Zugriffsverfahrens Interleave-Division Multiple Access (IDMA) als Mehrfachzugangsschema für den mindestens einen drahtlosen Benutzer.

2. Das Verfahren (200; 400; 500) nach Anspruch 1, wobei das Beachten (210; 410; 510) der mindestens einen Funkverbindungseigenschaft das Verifizieren (411; 511) umfasst, ob der mindestens eine drahtlose Benutzer eine Benutzermobilität erfährt, die über einem vordefinierten Mobilitätsgrenzwert liegt.

3. Das Verfahren (200; 400; 500) nach Anspruch 2, dann die Benutzung von IDMA für den mindestens einen drahtlosen Benutzer (421; 521) umfassend, wenn der Mobilitätsgrenzwert überschritten wird, und die Benutzung von FDMA für den mindestens einen drahtlosen Benutzer (423; 523) dann, wenn die vom Benutzer erfahrene Mobilität unter den Mobilitätsgrenzwert abfällt.

4. Das Verfahren (200; 400; 500) nach Anspruch 1, wobei das Beachten (210; 410; 510) der mindestens einen Funkverbindungseigenschaft das Verifizieren (412; 512) umfasst, ob eine Empfangsleistungsfähigkeit und/oder Übertragungsleistungsfähigkeit des mindestens einen drahtlosen Benutzers unter einen vordefinierten Leistungsgrenzwert abfällt.

5. Das Verfahren (200; 400; 500) nach Anspruch 4, dann die Benutzung von FDMA für den mindestens einen drahtlosen Benutzer umfassend, wenn der Leistungsgrenzwert überschritten wird, oder die Benutzung von IDMA für den mindestens einen drahtlosen Benutzer dann umfassend, wenn die Empfangsleistungsfähigkeit und/oder Übertragungsleistungsfähigkeit des Benutzers unter den Leistungsgrenzwert abfällt.

6. Das Verfahren (200; 400; 500) nach Anspruch 1, wobei das Beachten (210; 410; 510) der mindestens einen Funkverbindungseigenschaft das Verifizieren (413) umfasst, ob der mindestens eine drahtlose Benutzer eine Zwischenträgerinterferenz (Inter-Carrier Interference, ICI) von mindestens einem anderen drahtlosen Benutzer erfährt, die über einem vordefinierten ICI-Grenzwert liegt.

7. Das Verfahren (200; 400; 500) nach Anspruch 6, dann die Benutzung von IDMA für den mindestens einen drahtlosen Benutzer und den mindestens einen weiteren drahtlosen Benutzer umfassend, wenn der ICI-Grenzwert überschritten wird, und die Benutzung von FDMA für den mindestens einen drahtlosen Benutzer und den mindestens einen weiteren drahtlosen Benutzer dann, wenn die vom Benutzer erfahrene ICI unter den ICI-Grenzwert abfällt.

8. Das Verfahren (200; 400; 500) nach Anspruch 1, wobei das Beachten (210; 410; 510) der mindestens einen Funkverbindungseigenschaft das Verifizieren (513) umfasst, ob der mindestens eine drahtlose Benutzer einen zeitweiligen asynchronen Status erfährt, der über einem vordefinierten Asynchronitätsgrenzwert liegt.

9. Das Verfahren (200; 400; 500) nach Anspruch 8, dann die Benutzung von IDMA für den mindestens einen drahtlosen Benutzer (521) umfassend, wenn der Asynchronitätsgrenzwert überschritten wird, und die Benutzung von FDMA für den mindestens einen drahtlosen Benutzer (523) dann, wenn der vom Benutzer erfahrene Asynchronitätsstatus unter den Asynchronitätsgrenzwert abfällt.

10. Das Verfahren (200; 400; 500) nach Anspruch 1, wobei die Benutzung von IDMA als Mehrfachzugangsschema umfasst, einen Anzahl von IDMA-Benutzern oder Schichten anzupassen, die auf denselben Zeitfrequenz-Funkbetriebsmitteln multiplext werden, was auf der Grundlage des Beachtens einer aktuellen Fehlerquote (608; 610) erfolgt.

11. Das Verfahren nach Anspruch 10, wobei die Anzahl der IDMA-Benutzer oder Schichten reduziert (614) wird, wenn die beachtete aktuelle Fehlerquote eine Zielfehlerquote (612) übersteigt, und wobei die Anzahl der Benutzer erhöht (620) wird wenn die beachtete aktuelle Fehlerquote unter die Zielfehlerquote (616) abfällt.

12. Das Verfahren nach Anspruch 1, wobei die Benutzung von IDMA als Mehrfachzugangsschema umfasst, eine Übertragungswiederholungswahrscheinlichkeit für eine automatische Wiederholungsaufforderung (Automatic Repeat Request, ARQ) für den mindestens einen drahtlosen Benutzer anzupassen, was auf der Grundlage des Beachtens (706) einer aktuellen Übertragungswiederholungsfehlerquote erfolgt.

13. Das Verfahren nach Anspruch 12, wobei die ARQ-Übertragungswiederholungswahrscheinlichkeit reduziert (710) wird, wenn die beachtete Übertragungswiederholungsfehlerquote einen Übertragungswiederholungsfehlerquotengrenzwert (708) übersteigt, und wobei die ARQ-Übertragungswiederholungswahrscheinlichkeit erhöht (714) wird wenn die beachtete Übertragungswiederholungsfehlerquote unter den Übertragungswiederholungsfehlerquotengrenzwert (712) abfällt.

14. Das Verfahren nach Anspruch 1, wobei die Benutzung von IDMA als Mehrfachzugangsschema für die Vielzahl drahtloser Benutzer die Benutzung einer niedrigeren Coderate für die Vorwärtsfehlerkorrektur (Forward Error Correction, FEC) und/oder eines Modulationsschemas niedrigerer Ordnung als desjenigen umfasst, das für FDMA als Mehrfachzugangsschema für die Vielzahl drahtloser Benutzer benutzt wird.

15. Vorrichtung (900) für ein drahtloses Kommunikationssystem, wobei das drahtlose Kommunikationssystem mindestens ein Mehrfachzugangsschema für eine Vielzahl drahtloser Benutzer benutzt, wobei die Vorrichtung umfasst:

eine Schaltung (910), die konfiguriert ist das Beachten mindestens einer Funkverbindungseigenschaft für mindestens einen aus der Vielzahl drahtloser Benutzer; und
einen Schaltkreis (920), der dafür konfiguriert ist, um auf der Grundlage der mindestens einen beachteten Funkverbindungseigenschaft zwischen Frequenzmultiplexzugriff (Frequency Division Multiple Access, FDMA) und dem Zugriffsverfahrens Interleave-Division Multiple Access (IDMA) als Mehrfachzugangsschema für den mindestens einen drahtlosen Benutzer umzuschalten.

**Revendications**

1. Procédé (200 ; 400 ; 500) pour un système de communication sans fil, la communication sans fil utilisant au moins un schéma d'accès multiple pour une pluralité d'utilisateurs sans fil, le procédé comprenant les étapes suivantes :

observer (210 ; 410 ; 510) au moins une caractéristique de liaison radio pour au moins un utilisateur parmi la pluralité d'utilisateurs sans fil ; et
sur la base de l'au moins une caractéristique de liaison radio observée, commuter (220 ; 420 ; 520) entre l'accès multiple par répartition en fréquence, AMRF, et l'accès multiple par entrelacement, IDMA, comme schéma d'accès multiple pour l'au moins un utilisateur sans fil.

2. Procédé (200 ; 400 ; 500) selon la revendication 1, dans lequel l'observation (210 ; 410 ; 510) de l'au moins une caractéristique de liaison radio permet de vérifier (411 ; 511) si l'au moins un utilisateur sans fil subit une mobilité utilisateur supérieure à un seuil de mobilité prédéfini.

3. Procédé (200 ; 400 ; 500) selon la revendication 2, comprenant l'utilisation du IDMA pour l'au moins un utilisateur sans fil (421 ; 521), si le seuil de mobilité est dépassé, ou l'utilisation du AMRF pour l'au moins un utilisateur sans fil (423 ; 523), si la mobilité subie par l'utilisateur est inférieure au seuil de mobilité.

4. Procédé (200 ; 400 ; 500) selon la revendication 1, dans lequel l'observation (210 ; 410 ; 510) de l'au moins une caractéristique de liaison radio permet de vérifier (412 ; 512) si une capacité de puissance de réception et/ou une capacité de puissance d'émission de l'au moins un utilisateur sans fil est/sont inférieure(s) à un seuil de puissance prédéfini.

5. Procédé (200 ; 400 ; 500) selon la revendication 4, comprenant l'utilisation du AMRF pour l'au moins un utilisateur sans fil, si le seuil de puissance est dépassé, ou l'utilisation du IDMA pour l'au moins un utilisateur sans fil, si la capacité de puissance de réception et/ou d'émission de l'utilisateur est inférieure au seuil de puissance.

6. Procédé (200 ; 400 ; 500) selon la revendication 1, dans lequel l'observation (210 ; 410 ; 510) de l'au moins une caractéristique de liaison radio permet de vérifier (413) si l'au moins un utilisateur sans fil subit une interférence entre porteuses, ICI, provenant d'au moins un autre utilisateur sans fil, supérieure à un seuil ICI prédéfini.

7. Procédé (200 ; 400 ; 500) selon la revendication 6, comprenant l'utilisation du IDMA pour l'au moins un utilisateur sans fil et l'au moins un autre utilisateur sans fil, si le seuil ICI est dépassé, ou l'utilisation du AMRF pour l'au moins un utilisateur sans fil et l'au moins un autre utilisateur sans fil, si l'ICI subie par l'utilisateur est inférieure au seuil ICI.

8. Procédé (200 ; 400 ; 500) selon la revendication 1, dans lequel l'observation (210 ; 410 ; 510) de l'au moins une caractéristique de liaison radio permet de vérifier (513) si l'au moins un utilisateur sans fil subit un état temporel asynchrone supérieur à un seuil d'asynchronicité prédéfini.

9. Procédé (200 ; 400 ; 500) selon la revendication 8, comprenant l'utilisation du IDMA pour l'au moins un utilisateur sans fil (521), si le seuil d'asynchronicité est dépassé, ou l'utilisation du AMRF pour l'au moins un utilisateur sans fil (523), si l'état asynchrone subi par l'utilisateur est inférieur au seuil d'asynchronicité.

10. Procédé (200 ; 400 ; 500) selon la revendication 1, dans lequel l'utilisation du IDMA comme schéma d'accès multiple comprend l'ajustement d'un nombre d'utilisateurs ou de couches IDMA multiplexés sur les mêmes ressources radio temps-fréquence sur la base de l'observation d'un taux d'erreur actuel (608 ; 610).

11. Procédé selon la revendication 10, dans lequel le nombre d'utilisateurs ou de couches IDMA est réduit (614), si le taux d'erreur actuel observé dépasse un taux d'erreur cible (612), et dans lequel le nombre d'utilisateurs est augmenté (620), si le taux d'erreur actuel observé est inférieur au taux d'erreur cible (616).

12. Procédé selon la revendication 1, dans lequel l'utilisation d'IDMA comme schéma d'accès multiple comprend l'ajustement d'une probabilité de retransmission de demande de répétition automatique, ARQ, pour l'au moins un utilisateur sans fil sur la base de l'observation (706) d'un taux d'erreur de retransmission actuel.

13. Procédé selon la revendication 12, dans lequel la probabilité de retransmission ARQ est diminuée (710), si le taux d'erreur de retransmission observé dépasse un seuil de taux d'erreur de retransmission (708), et dans lequel la probabilité de retransmission ARQ est augmentée (714), si le taux d'erreur de retransmission observé est inférieur au seuil de taux d'erreur de retransmission (712).

14. Procédé selon la revendication 1, dans lequel l'utilisation du IDMA comme schéma d'accès multiple pour la pluralité d'utilisateurs sans fil comprend l'utilisation d'un taux de codage de correction d'erreurs sans voie de retour, FEC, inférieur et/ou d'un schéma de modulation d'ordre inférieur par rapport à celui/ceux utilisé(s) pour le AMRF comme schéma d'accès multiple pour la pluralité d'utilisateurs sans fil.

15. Appareil (900) pour un système de communication sans fil, la communication sans fil utilisant au moins un schéma d'accès multiple pour une pluralité d'utilisateurs sans fil, l'appareil comprenant :

des circuits (910) configurés pour observer au moins une caractéristique de liaison radio pour au moins un utilisateur parmi la pluralité d'utilisateurs sans fil ; et
des circuits de commutation (920) configurés pour commuter, sur la base de l'au moins une caractéristique de liaison radio observée, entre l'accès multiple par répartition en fréquence, AMRF et l'accès multiple par entrelacement, IDMA, comme schéma d'accès multiple pour l'au moins un utilisateur sans fil.

Fig. 1

200

observe at least
one radio link characteristic ～210

220

threshold ?

FDMA

IDMA

Fig. 2

Fig. 3a

Fig. 3b

400

Type II traffic
(Regular scheduling: sub-bands $B_1$, $B_2$, ...,
$B_N$ are one-to-one corresponding to user 1, 2,
... , N, respectively.) ⌇ 410

420

Is the user i, j
with high mobility? — Yes

411

No

412

Do the user i, j
have device power
limitation? — Yes

421

Deploy the IDMA for the user i, j,
by adjusting their FEC code rate and
modulation scheme.

No 413

Do the user i, j
suffer from ICI, coming
from user p, q .? — Yes

Select the sub-bands $B_i$, $B_j$, $B_p$, $B_q$,
and deploy the IDMA for the user i,
j and p, q, by adjusting their FEC
code rate and modulation scheme.

No

422

Deploy conventional FDMA for the
user i, j, by adjusting their FEC
code rate and modulation scheme. ⌇ 423

Fig. 4

500

Type II traffic
(Regular scheduling: sub-band B to
accommodate user 1, 2, ... , N, with respect
to joint detection, e.g. Interference
Cancellation (IC) or MIMO techniques

510

520

Are some users with
high mobility?

Yes

511

No

512

Do some users
have device power
limitation?

Yes

No

513

Can the users
suffer from possible
asynchronicity?

Yes

No

Deploy the IDMA for the users, by
adjusting their FEC code rate and
modulation scheme.

521

Deploy joint detection in
conventional FDMA for the users, by
adjusting their FEC code rate
and modulation scheme.

523

Fig. 5

Reduce number of scheduled layers/users per resource and adjust mapping table 614

Supported layer mapping table 602

Selected IDMA user set: User 1 ... K 604

IDMA receiver 606

Count number of successful CRC checks 608

Average over certain time to get BLER estimate 610

BLER too high? 612

Yes

No

BLER too low? 616

No

Yes

Continue observation 618

Increase number of scheduled layers/users per resource and adjust mapping table 620

600

Fig. 6

EP 2 961 083 B1

Fig. 7

Decrease $P_R$ — 710

MS: Retransmit with probability $P_R$ — 704

BS: Track retransmission error rate $BLER_R$ — 706

IDMA transmission succesful? — 702

No(NACK)

Yes(ACK)

Transmit next code block in buffer

$BLER_R$ too high? — 708

Yes

No

$BLER_R$ too low? — 712

No

Yes

Continue observation

Increase $P_R$ — 714

700

Fig. 8

900

910

920

912

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2010018927 A

### Non-patent literature cited in the description

- Uplink Multiple Access Aspect of FDD LTE. 3GPP Draft; R1-050402. Mobile Competence Centre, 03 May 2005
- **L. PING ; L. LIU ; K. WU ; W.K. LEUNG.** Interleave-Division Multiple-Access. *IEEE Trans. Wireless Commun.,* April 2006, vol. 5 (4), 938-947
- **K. KUSUME ; G. BAUCH ; W. UTSCHICK.** IDMA vs. CDMA: Analysis and Comparison of Two Multiple Access Schemes. *IEEE Trans. Wireless Commun.,* January 2012, vol. 11 (1), 78-87
- **HUSAIN NIZAMUDDIN ; ANDRÉ F. DOS SANTOS ; THORSTEN WILD.** A Random Access and Multiuser Detection Approach for Massive Access of Low-Complexity Machine Communications in cellular networks. *IEEE WCNC,* 14 April 2014
- *Digital Video Broadcasting (DVB): Second Generation Framing Structure, Channel Coding and Modulation for Broadcasting, Interactive Services, New Gathering and Other Broadband Satellite Applications,* June 2004